Europäisches Patentamt

(19) European Patent Office

Office européen des brevets

(11) Publication number: **0 109 465**
**B1**

## EUROPEAN PATENT SPECIFICATION

(45) Date of publication of patent specification: **22.07.87**

(51) Int. Cl.⁴: **B 65 D 35/02, B 32 B 27/00**

(21) Application number: **82306219.5**

(22) Date of filing: **23.11.82**

(54) Multiple layer flexible sheet structure for packaging, including tubes made from such structure.

(43) Date of publication of application:
**30.05.84 Bulletin 84/22**

(45) Publication of the grant of the patent:
**22.07.87 Bulletin 87/30**

(84) Designated Contracting States:
**AT BE CH DE FR GB IT LI LU NL SE**

(56) References cited:
**GB-A-1 456 629**
**US-A-3 343 663**
**US-A-3 347 419**
**US-A-4 117 193**

(73) Proprietor: **AMERICAN CAN COMPANY**
**American Lane**
**Greenwich, Connecticut 06830 (US)**

(72) Inventor: **Eckstein, John P.**
**1206 Glenayre Drive**
**Neenah Wisconsin (US)**

(74) Representative: **Harvey, David Gareth et al**
**Graham Watt & Co. Riverhead**
**Sevenoaks Kent TN13 2BN (GB)**

Courier Press, Leamington Spa, England.

**0 109 465**

**Description**

This invention pertains to multiple layer flexible sheet structures, according to the preamble of claim 1 as known from US—A—3347419, one use of which is in flexible tubes of the type commonly used for packaging paste type products. Thick metal foil as a single layer has long been used to hold and dispense paste products. However, metal tubes have definite shortcomings. Compared to other tube structures, metal tubes are very expensive, they dent easily and they tend to crack with only a moderate amount of flexing.

More recently, a large share of the tube market has been taken by flexible sheet materials having a multiplicity of polymeric layers. Typical tubes have an inner heat sealable layer, an outer heat sealable layer, and a barrier layer interposed therebetween. Additional layers may be used in order to provide other properties or qualities.

Layers of a non-polymeric nature may also be included in these sheet materials to provide specialized performance functions.

It is known, for example, to provide a layer of thin aluminium foil as a high quality barrier layer. when foil is used, it is common practice to use a highly adhesive polymer to adhere it to its adjacent layers in the structure.

It is also known to provide a layer of paper, which may provide dimensional stability, and also provide an aesthetically pleasing and aseptically clean appearing white background.

While known structures have experienced success in the market place, there has been a degree of failure with existing tube structures. Moreover, certain products are so hard to hold that no polymeric tube structure has hitherto been acceptable for packaging them.

A particular problem of prior tubes is attributed to failure of the tubes due to rough handling during shipping, wherein the tube sidewall splits, allowing the contents to ooze out.

Another problem is associated with the chemical activity of a product held in tubes having an aluminium foil layer. The polymeric material between the foil and the product may develop small cracks known as stress cracks, occasioned or hastened by chemical attack by the product. Stress cracks then allow the product to penetrate the polymer and attack the foil, causing loss of adhesion between the foil and the adjoining layers. Alternatively the product may attack the interfacial bond between polymer layers thus causing loss of adhesion between the polymer layers. In either case, failure of the respective bond results in premature failure of the tube.

In addressing the stress crack problem, it is known to use a thick layer of ethylene acrylic acid (EAA) as the product contacting surface. While EAA does have substantial stress crack resistance, it is relatively expensive, and it is highly desirable to find a cheaper replacement material. Further, small particles of EAA are rubbed off its surface by the processing equipment during tube processing. These particles, known as polydust, are sometimes picked up by tubes, and may even become entrapped in the tube. While materials used for contact with hygienic products are preferably acceptable for contact with the product, it is highly desired to avoid inclusion of any type of contamination into the product.

Thus it is desirable to find a material which has good stress crack resistance and also does not generate polydust in the processing equipment.

The ability of a tube to withstand rough handling is related to its ability to withstand a drop test described hereinafter as a tube drop test, in which a tube filled with product is repeatedly dropped until the tube fails. All tubes shipped in commerce may be expected to be subjected to rough handling, irrespective of the product contained and are thus subject to handling stress as exemplified in the tube drop test. Economic construction of tubes consistently capable of passing the drop test has remained a problem.

While numerous attempts have been made in the packaging industry to resolve these problems in tube construction, and while certain polymers and, in particular polyethylenes, have been offered to the packaging industry with suggestions of improved stress crack resistance, the problems of stress crack resistance and tube sidewall strength have remained unresolved. We have sought to resolve these problems by devising improved sheet structures, and tubes made therefrom, after extensive testing of many alternative structures.

We have found that surprising improvements are attained in a multiple layer sheet structure wherein the layers are firmly adhered to each other to make a unitary structure, when the layers comprise, in order, a heat sealable layer, a first adhesive layer, a barrier layer, a second adhesive layer, a layer of oriented polypropylene (OPP) which is optional but desirable, and a polyethylene layer.

Packaging film based on oriented polypropylene is known from US—A—4,117,193, wherein the OPP has laminated to one or both surfaces thereof a blend of ethylene-butene copolymer and a polyolefin resin e.g. high density polyethylene; the blend layer(s) provide the film with heat sealability.

US—A—3,347,419 discloses a plural layer structure falling within the scope of the pre-characterising portion of our appended claim 1.

The present invention accordingly provides a sheet structure including a multiplicity of layers firmly adhered to each other, these layers in order comprising an exterior heat-sealable layer, a first adhesive layer, a barrier layer, a second adhesive layer and a polyethylene layer, characterised in that, in order to provide the structure with enhanced shock resistance, a layer of oriented polypropylene (OPP) is interposed

2

between the second adhesive and polyethylene layers, the latter two layers serving in an effective adhesive capacity to join the OPP layer into the structure with good adhesion.

The OPP layer may be at least 0.65 mil thick (0.016 mm) and is preferably 0.9 to 2.0 mils (0.023 to 0.051 mm) thick, the polyethylene layer desirably being about 0.7 to 3.0 mils (0.018 to 0.076 mm) thick. The sheet structure may have, on the polyethylene layer, additional layers of, in order, a paper layer, a second polyethylene layer, and an exterior layer, the exterior layer being bonded to the second polyethylene layer with good adhesion, and being heat sealable to the heat sealable layer, which advantageously is LLDPE. LLDPE is used collectively herein to refer to linear low density polyethylene, both homopolymers and copolymers, and should be interpreted as such throughout the specification.

In preferred structures, the LLDPE layer is 0.7 to 3.0 mils (0.018 to 0.076 mm) thick. The barrier, a foil, is 0.35 to 0.7 mil (0.009 to 0.018 mm) thick, the oriented layer is 0.9 to 2.0 mils (0.023 to 0.051 mm) thick, the first polyethylene layer is 0.7 to 3.0 mils (0.018 to 0.076 mm) thick, and the sum of the thicknesses of the second polyethylene layer and the exterior layer combined is about 2.0 to 5.0 mils (0.051 to 0.13 mm).

In a most preferred sheet structure, the LLDPE layer is 1.2 mils (0.030 mm) thick, the foil is 0.35 mil (0.009 mm) thick and the OPP layer is about 1 mil (0.025 mm) thick. Further, the sum of the thicknesses of the LLDPE layer and the first adhesive layer is 2.0 to 5.0 mils (0.051 to 0.13 mm).

Another structure disclosed hereinafter is one wherein the layers comprise, in order, a layer of LLDPE, a first adhesive layer, a metal foil layer, a second adhesive layer, and a polyethylene layer. The first and second adhesive layers are effective to join the foil to the polyethylene and LLDPE layers respectively, and the layer thicknesses are similar to those described for the preceding structure.

This structure, which has no OPP layer, has especially good stress-crack resistance. The structure is being made the subject of a European divisional patent application, No. 86102011.3, Publication No. 0203265.

In some embodiments of the present invention, the second adhesive layer and the first polyethylene layer contain ethylene methyl acrylate copolymer (EMA) as a blend component.

A flexible tube according to the invention is made of sheet material having multiple layers firmly adhered to each other into a unitary structure, characterised in that the sheet material comprises consecutive layers which, taken in order, include

    (a) a first heat sealable polymer layer;
    (b) a first adhesive layer;
    (c) a metal foil layer;
    (d) a second adhesive layer;
    (e) an OPP (oriented polypropylene) layer;
    (f) a polyethylene adhesive layer;
    (g) a paper layer; and
    (h) a second heat sealable polymer layer.

The first heat sealable polymer layer is preferably LLDPE.

In a most preferred tube according to the invention, there is an exterior layer of polyethylene on the second heat sealable polymer layer, and an additional polymeric layer between the paper layer and the second heat sealable layer. A preferred layer structure includes: an LLDPE layer 0.7 to 3.0 mils (0.018 to 0.076 mm) thick; foil 0.35 to 0.7 mil (0.009 to 0.018 mm) thick, an OPP oriented layer, 0.9 to 2.0 mils (0.023 to 0.051 mm) thick, as the third adhesive layer, a layer of polyethylene 0.7 to 2.0 mils (0.018 to 0.051 mm) thick. The sum of thicknesses of the second heat sealable layer and the additional layer, in the preferred structure is 2.0 to 5.0 mils (0.051 to 0.13 mm). Further, the sum of the thicknesses of the LLDPE layer and the first adhesive layer is likewise 2.0 to 5.0 mils (0.051 to 0.13 mm).

The invention will now be described in more detail by way of example only with reference to the accompanying drawings in which:

Figure 1 is a cross-section of a first multiple layer sheet structure embodying this invention,

Figure 2 is a cross-section of a second multiple layer sheet structure embodying this invention,

Figure 3 is a cross-section of another multiple layer sheet structure not embodying this invention,

Figure 4 is a cross-section of a prior art sheet structure, and

Figure 5 is a partially cut-away view of a product-containing tube made from sheet structure according to this invention.

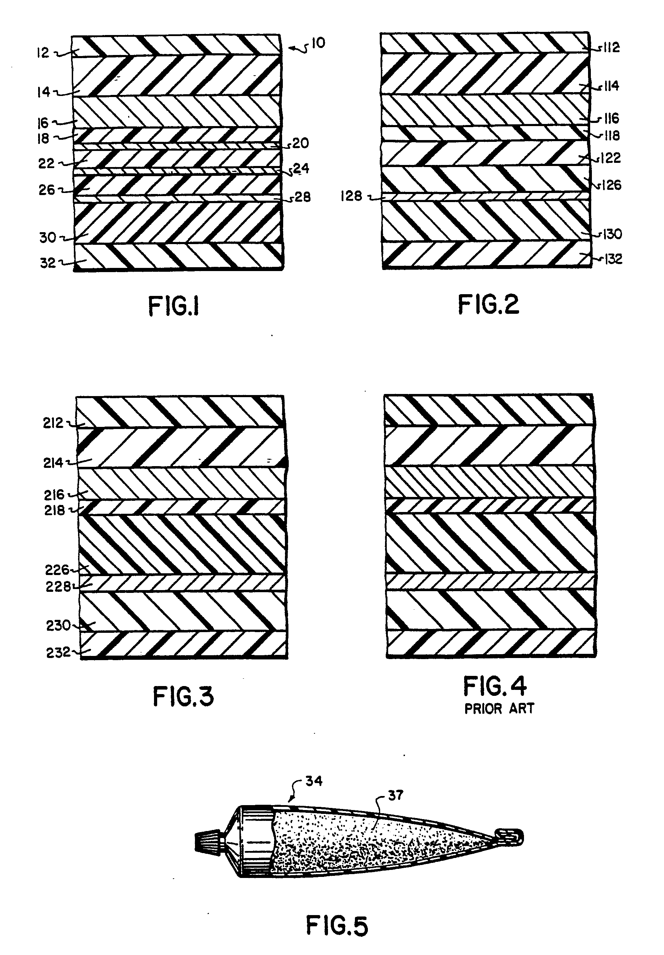

Turning now to Figure 1, the numeral 10 designates the entire multiple layer sheet structure cross-section. Layers 12, 14, 18 and 32 are low density polyethylene (LDPE). Layer 16 is paper. Layer 22 is oriented polypropylene (OPP). Layers 26 and 30 are ethylene acrylic acid (EAA). Layer 28 is a metal foil. Layers 20 and 24 are polyethylene imine primer (PEI).

Beginning on the top surface of the structure 10, as shown, the first layer 12 is LDPE. The second layer 14 is LDPE blended with a coloring pigment. The third layer 16 is paper. The fourth layer 18 is LDPE which, as will be seen later, is used here as an adhesive layer. Layer 18 is made effective as an adhesive to layer 22, OPP, through the use of a primer coating 20 of PEI. Layer 22 is also effectively adhered to the next adhesive layer 26, an EAA copolymer, through the use of a PEI primer coating 24. Adhesive layer 26 adheres layer 22 to the next, metal foil layer 28 which is preferably aluminium foil. Layer 30 is EAA, which effectively adheres LDPE layer 32, to the foil.

When the laminate 10 is used to make a tube, layers 12 and 14 combined act as heat seal layers in forming a joint on the tube sidewall. The sidewall joint has a portion of the surface of layer 12 sealed against a portion of the surface of layer 32 to form a lap seal. Likewise, layer 30 is effectively used as a portion of the heat seal on that side of the sheet structure such that layers 30 and 32 co-act cooperatively, as necessary, to form the heat seal. Layer 32 will form the inside surface of the tube. Layer 30 also serves as a barrier between the foil layer 28 and the product 37 (Figure 5) to protect the foil from chemical attack by the product. Paper layer 16 serves the known function of providing dimensional stability properties to the structure. The aluminium foil layer 28 serves as a barrier to transmission of gases, and to any light which may penetrate layers 14 and 16. The aluminium foil further serves, in combination with the paper layer 16, to provide dimensional stability to the structure.

Layer 22 is oriented polypropylene, homopolymer or copolymer, hereinafter referred to collectively as OPP. The OPP layer is adhered to adjacent adhesive layers 18 and 26 of LDPE and EAA respectively thorugh the PEI primer layers 20 and 24. While it is shown separately for illustration purposes, the PEI primer is considered part of the respective adhesive layer 18, 26. The OPP layer may be a single layer, but may alternatively consist of multiple layers thereof so long as the functional properties are as described. The OPP layer serves the function of strengthening the sheet structure such that tubes 34, made from sheet structure 10 can withstand more physical shock-type abuse than structures heretofore known, one such prior art structure being shown in Figure 4. In order for the OPP layer 22 to perform its shock resistance function in the tubes we made and tested, see later, it must meet two specific criteria in its incorporation into the illustrated tube structure. First the OPP layer had to be a minimum of 0.65 mil (0.016 mm) thick in order to exhibit enough strength in the structure to provide a significant strength improvement. Desirably, it is 0.9 to 1.0 mil (0.023 to 0.025 mm) thick. Secondly, the OPP had to be firmly bonded to the adjacent adhesive layers 18 and 26. It has, for example, been found that structure similar to structure 10 of Figure 1, but omitting primer layers 20 and 24, has less resistance to certain shock loads than does the prior art structure of Figure 4. Analysis showed about 30 grams of adhesion between the OPP and the adjacent layers of LDPE and EAA. See structrue A-1 in Table 1. In the adhesion test a one inch (2.54 cm) wide strip of the structure 10 is peeled apart at the appropriate layer interface on an Instron Tensile Tester at 10 inches per minute (25.4 cm/min) cross-head speed. The Instron Tester is from Instron Corporation, Canton, Massachusetts. Improved structures according to the invention generally exhibit adhesion values of 100 grams per inch (2.54 cm) or more and certain structures have 200 to 400 grams per inch (2.54 cm), with some structures being even higher. Tests have been successfully completed with certain tubes of the invention wherein the adhesion values were as low as 54 grams per inch (2.54 cm). Thus, for the tubes we made and tested, the adhesion between the OPP and the adjacent layers should be at least about 54 grams per inch (2.54 cm) and is preferably at least 100 grams per inch (2.54 cm).

In another embodiment of the invention, shown in Figure 2, adhesive layers 118 and 126, corresponding to layers 18 and 26 of Figure 1, are used without the PEI primer, and function effectively to bond the OPP layer 122 to the adjacent layers. Layers 118 and 126 are modified from layers 18 and 26 of Figure 1 by blending 20% to 100% ethylene methyl acrylate copolymer (EMA) into the 118 and 126 layers. (While a 100% blend is pure EMA, it is intended to be included herein in the blend description). The EMA blends, then, provide effective adhesion between the OPP and the adjacent layers.

In further examination of the shock resistance of tubes of this invention, it is submitted that certain structures of the prior art achieved a limited degree of success by incorporating up to 3.0 mils (0.076 mm) or more of aluminium foil into, for example, layer 28. While such structures exhibit the desired shock resistance, they suffer other problems. For example, such thick foil is substantially more expensive than our 0.35 mil (0.009 mm) foil, the foil being one of the more expensive components of the structure. In processing a structure into tubes and forming the side seam, structures having a thick foil, such as 2 or 3 mils (0.051 to 0.076 mm), tend to generate foil slivers during the side-seaming operation. Further, such tubes may exhibit satisfactory properties when produced; but fail during use, wherein the layers may partially separate when the tube is rolled up then unrolled.

Structures according to the invention, such as in Figures 1 and 2, may be easily formed into tubes, filled, and sealed on conventional equipment using conventional processes. As will be seen in the disclosure hereinafter of test data, a structure of Figure 1, 11.0 mils (0.28 mm) thick has substantially improved shock resistance as compared to a prior art structure according to Figure 4 which is 13.0 mils (0.33 mm) thick and is further illustrated as Prior Art Structure A in Table 1 presented hereinafter. If examples of the invention are compared with Prior Art Structure A, it will be seen that the amount of foil has advantageously been reduced by 0.35 mil (0.009 mm), LDPE has been reduced by 0.35 mil and EAA has been reduced by 2.3 mils (0.058 mm) in our examples. Thus the overall material savings is substantial.

In a further improvement provided by this invention, layer 32 of Figure 1, and correspondingly layer 132 of Figure 2, is composed of LLDPE (linear low density polyethylene) rather than LDPE. This improvement concerns the protection of foil layer 28 and its adhesion at the interface with layer 30, and also protection of the interfacial adhesion between layers 30 and 32.

It is normal practice, such as in the prior art structure of Figure 4, to provide 2.0 mils (0.051 mm) of EAA and 1.2 mil (0.030 mm) LDPE. Such structure is vulnerable to attack by certain chemical products which may be in the tubes, and fails to contain the product by failure known as stress cracking. This phenomenon occurs under physical stress and in the presence of certain chemical products, when the LDPE layer forms minute cracks. These cracks allow the chemical product to effectively penetrate the LDPE layer, and may permeate through the EAA layer. Product permeation of the EAA layer facilitates attack of the inter-layer adhesion between the EAA and the foil. The typical result is loosening or weakening of the adhesion at the interface of the foil and EAA layers and, sometimes, visible corrosion of the foil layer. Once the adhesion is degraded, the unitary nature of the multiple layer structure is destroyed and the structure is unable to perform its function properly.

In an attempt to achieve improved stress crack resistance, the prior art has substituted EAA into layer 32 in place of the LDPE. This substitution has been partially successful, but at the substantially increased cost of additional expensive EAA. Functionally, however, the EAA surface is susceptible to scuffing, and thus must be handled very carefully, which is undesirable in commercial manufacturing operations. Surprisingly, the substitution of low-cost LLDPE for LDPE results in substantially improved stress crack resistance—to a level at least as good as EAA.

For use in tubes requiring good stress crack resistance, but not necessarily requiring maximum shock resistance, the OPP layer 22 and primer layers 20 and 24 may be omitted, yielding the structure shown in Figure 3, wherein layers similar to those of Figure 1 are given like numbers of the 200 series. The structure of Fig. 3 is outside the scope of this invention and is the subject of our European divisional patent application No. 86102011.3, Publication No. 0203265.

It should be appreciated that the outer layers of the tube, represented, for example in Figure 1 by layers 12 and 14, may be selected from those materials which are compatible with layers 30 and 32. Examples of acceptable materials are LDPE, LLDPE, EAA, EMA, medium density polyethylene (MDPE), high density polyethylene (HDPE) and ethylene vinyl acetate (EVA).

The following specific examples illustrate the invention further.

Example 1
In making a multiple layer sheet structure of this invention, two mils (0.051 mm) of pigmented LDPE was extrusion coated onto 1.6 mils (0.041 mm) of paper. A sheet of one mil (0.025 mm) OPP was coated with PEI primer on one of its surfaces, and the coating dried. The primer surface of the OPP was extrusion laminated to the uncoated surface of the paper using 0.7 mil (0.018 mm) LDPE laminant; and the coated side of the paper was overcoated with an extrusion coating of 1.15 mils (0.029 mm) of LDPE. The exposed surface of the OPP was coated with PEI primer and the primer dried. The primed surface was extrusion laminated to a first surface of 0.35 mil (0.009 mm) aluminium foil, using 1.0 mil (0.0025 mm) of EAA as the laminant. Finally, the second surface of the foil was coextrusion coated with 2.0 mils (0.051 mm) of EAA and 1.2 mils (0.030 mm) LDPE, the EAA being adjacent the foil. The resulting multiple layer structure was 11.0 mils (0.28 mm) thick, and was as shown in Figure 1.

Example 2
A sheet structure was made as in Example 1 except that the OPP was not primed on either of its surfaces. Rather the extrusion laminants, corresponding to layers 118 and 126 of Figure 2, contained EMA. Layer 118 was 100% EMA. Layer 126 was a blend of 75% EMA and 25% EAA. The 1.2 mil surface layer, represented by layer 32 of Figure 1 was LDPE.

Example 3
(This Example is not in accordance with this invention as claimed, but is the subject of our aforesaid divisional application).

Two mils (0.051 mm) of pigmented LDPE was extrusion coated onto 1.6 mils (0.041 mm) of paper. The presently uncoated surface of the paper was then extrusion coated using 0.7 mil (0.018 mm) LDPE, and the pigmented LDPE-coated surface of the paper was over-coated, by extrusion coating, with 1.5 mils (0.038 mm) LDPE. 0.7 mil (0.018 mm) aluminium foil was extrusion laminated to the 0.7 mil LDPE with 3.3 mils (0.084 mm) EAA. Finally 2.0 mils (0.051 mm) EAA and 1.2 mil (0.030 mm) LLDPE were coextrusion coated onto the exposed foil surface, with the EAA adjacent the foil. The resulting sheet structure was 13.0 mils (0.33 mm) thick.

Examples 1—9
The foregoing examples, together with additional structures are shown in the following Table 1. In this Table, Examples 1, 2, 4 to 9 and Structure A-1 are according to the invention. Prior Art A and Example 3 are not part of this invention, and are included for comparative purposes only.

TABLE 1

| Example 1 | Example 2 | Example 3 |
|---|---|---|
| 1.15 mil LDPE | 1.15 mil LDPE | 1.5 mil LDPE |
| 2.0 mil Pigmented LDPE | 2.0 mil Pigmented LDPE | 2.0 mil Pigmented LDPE |
| 1.6 mil Paper | 1.6 mil Paper | 1.6 mil Paper |
| 0.7 mil LDPE | 0.7 mil EMA | 0.7 mil LDPE |
| PEI primer | 1.0 mil OPP | 3.3 mil EAA |
| 1.0 mil OPP | 1.0 mil EMA/EAA | 0.7 mil Foil |
| PEI primer | Blend | 2.0 mil EAA |
| 1.0 mil EAA | 0.35 mil Foil | 1.2 mil LLDPE |
| 0.35 mil Foil | 2.0 mil EAA | 13.0 mil Total (0.33 mm) |
| 2.0 mil EAA | 1.2 mil LDPE | |
| 1.2 mil LDPE | 11.0 mil Total (0.28 mm) | |
| 11.0 mil Total (0.28 mm) | | |

| Example 4 | Example 5 | Example 6 |
|---|---|---|
| 1.5 mil LDPE | 1.15 mil LDPE | 1.15 mil LDPE |
| 2.0 mil Pigmented LDPE | 2.0 mil Pigmented LDPE | 2.0 mil Pigmented LDPE |
| 1.6 mil Paper | 1.6 mil Paper | 1.6 mil Paper |
| 2.0 mil LDPE | 0.7 mil LDPE | 0.7 mil LDPE |
| PEI primer | PEI primer | PEI primer |
| 1.0 mil OPP | 0.5 mil OPP | .75 mil OPP |
| PEI primer | PEI primer | PEI primer |
| 1.0 mil EAA | 1.0 mil EAA | 1.0 mil EAA |
| 0.7 mil Foil | .35 mil Foil | .35 mil Foil |
| *3.2 mil EAA | 2.0 mil EAA | 2.0 mil EAA |
| 13.0 mil Total (0.33 mm) | 1.2 mil LDPE | 1.2 mil LDPE |
| | 10.5 mil Total (0.267 mm) | 10.75 mil Total (0.273 mm) |

TABLE 1 (continued)

| Example 7 | Example 8 | Example 9 |
|---|---|---|
| 1.15 mil LDPE | 1.15 mil LDPE | 1.15 mil LDPE |
| 2.0 mil Pigmented LDPE | 2.0 mil Pigmented LDPE | 2.0 mil Pigmented LDPE |
| 1.6 mil Paper | 1.6 mil Paper | 1.6 mil Paper |
| .7 mil LDPE | 0.7 mil LDPE | 0.7 mil LDPE |
| PEI primer | PEI primer | PEI primer |
| .65 mil OPP | 0.9 mil OPP | 1.0 mil OPP |
| PEI primer | PEI primer | PEI primer |
| 1.0 mil EAA | 1.0 mil EAA | 3.3 mil EAA |
| .35 mil Foil | .35 mil Foil | 0.7 mil Foil |
| 2.0 mil EAA | 2.0 mil EAA | 2.0 mil EAA |
| 1.2 mil LDPE | 1.2 mil LDPE | *2.5 mil LDPE |
| 10.65 mil Total (0.270 mm) | 10.9 mil Total (0.277 mm) | 14.95 mil Total (0.38 mm) |

| Prior art A | Structure A-1 |
|---|---|
| 1.5 mil LDPE | 1.5 mil LDPE |
| 2.0 mil Pigmented LDPE | 2.0 mil Pigmented LDPE |
|  | 1.6 mil Paper |
| 1.6 mil Paper | 2.0 mil LDPE |
| 0.7 mil LDPE | 1.0 mil OPP |
| 3.3 mil EAA | 1.0 mil EAA |
| 0.7 mil Foil | 0.7 mil Foil |
| 2.0 mil EAA | 2.0 mil EAA |
| 1.2 mil LDPE | 1.2 mil LDPE |
| 13.0 mil Total (0.33 mm) | 13.0 mil Total (0.33 mm) |

* 3.2 mil=0.081 mm
* 2.5 mil=0.063 mm

In the above Table, 1 mil=0.0254 mm and the present description notes the metric equivalents of all the above imperial dimensions.

The sheet materials shown in the Examples were made into dispensing tubes in known manner. That is, tubes were formed by forming a longitudinal lap seam by heat sealing techniques to form tubes 1-11/32 inches (3.4 cm) diameter. The tubes were then cut to length and heads were injection molded into one end, including the use of conventional inserts, and capped. The tubes were filled with product and the ends sealed. The filled tubes were then subjected to testing to demonstrate their strengths, both immediately and after predetermined agings.

7

Drop Tests

There were two drop test procedures, performed with tubes filled with toothpaste. In the head drop test, a tube was dropped on its capped head from a height of 4 feet (1.22 m) onto a hard surface. The same tube was repeatedly dropped until it failed, with a maximum of 11 drops per tube, 3 tubes per variable.

In the side drop test, a tube was dropped on its side from a height of 4 feet (1.22 m) onto a hard surface. The same tube was repeatedly dropped until it failed, with a maximum of 11 drops per tube, 3 tubes per variable.

In evaluating the tubes according to the drop tests, each drop was counted as one point. Thus each tube could contribute a maximum of 11 points to the evaluation, and with a total of 6 tubes per example, the maximum possible score for each example is 66 points. Where more than 6 tubes were tested the data in Table 2 represent the average 6-tube results.

Drop tests were performed immediately after filling, and again after accelerated aging. The tests immediately after filling represent the best results to be expected during the life cycle of the package. The accelerated aging, on the other hand, caused significant increase in the fluidity of the product, so that it was a dense fluid, rather than a paste. Thus the drop tests after aging subjected the tubes to substantially higher hydraulic shocks, and represent the extreme case of physical abuse.

Table 2 clearly shows that tubes made from structures embodying this invention are substantially stronger than tubes made from the Prior Art A structure. It should be noted here that Example 5 has been included to show the criticality of the thickness of the OPP layer. It is seen that the tube made for testing from the Example 5 structure, with 0.5 mil (0.013 mm) OPP, is no better than the Prior Art "A" structure in the Head Drop test; whereas Examples 6 and 7, with 0.75 and 0.65 mil (0.019 mm and 0.016 mm) OPP, respectively, show some improvement, even under the severe test conditions of the aged structures; while the Examples having at least 0.9 mil (0.023 mm) OPP gave the best results.

It is significant to note that, under the test procedure described, the entry of a numeral 3 score indicates that 3 tubes were dropped once, and all 3 tubes failed to survive the first drop. Thus the "A" structure did not survive any of the head drop tests, not even right after filling. Neither did the Example 5 structure survive any drops; but the structures of the invention did.

TABLE 2
Test drops

| Example No. | Immediate | | | Aged 14 days, 120°F. | | |
|---|---|---|---|---|---|---|
| | Side drop | Head drop | Total | Side drop | Head drop | Total |
| Prior art A | 16 | 3 | 19 | 13 | 3 | 16 |
| 1 | 32.5 | 33 | 65.5 | 28 | 32.5 | 60.5 |
| 2 | 25.5 | 33 | 58.5 | 18 | 32 | 50 |
| 3 | | | N/D | | | N/D |
| 4 | | | N/D | | | N/D |
| 5 | 19 | 3 | 22 | 15 | 3 | 18 |
| 6 | 33 | 19 | 52 | 16 | 5 | 21 |
| 7 | 23 | 20 | 43 | 12 | 7 | 19 |
| 8 | 28 | 33 | 61 | 24 | 33 | 57 |
| 9 | 33 | 33 | 66 | 33* | 33* | 66* |

*aged 1 month, 75°F.
N/D=no data

Stress crack tests

In evaluating stress crack resistance, experimental structures were compared to the Prior Art A structure and to the Prior Art structures B and C below.

| Prior Art B | Prior Art C |
|---|---|
| 1.5 mil LDPE | 1.5 mil LDPE |
| 2.0 mil Pigmented LDPE | 2.0 mil Pigmented LDPE |
| 1.6 mil Paper | 1.6 mil Paper |
| 0.7 mil LDPE | 0.7 mil LDPE |
| 3.3 mil EAA | 3.3 mil EAA |
| 0.7 mil Foil | 0.7 mil Foil |
| 3.2 mil EAA | 1.0 mil EAA |
| 13.0 mil Total | 2.2 mil EAA |
| | 13.0 mil Total |

In one stress crack test, tubes from Example 3 and Prior Art structure A were filled with mineral spirits. Duplicate sets of samples were stored in 2 trials at 120°F. and 140°F. (49 and 60°C). Stress crack failures appeared in the "A" tubes of both sets after 5 days, while the Example 3 tubes showed no failure after 1 month.

In another stress crack test of Example 3 and Structure "A", tubes were filled with toothpaste and stored at 120°F. (49°C). After one month, the tubes were squeezed to compare seal integrity. The prior art tubes failed at lower squeezing pressures than Example 3 tubes.

In still another stress crack test of Example 3 against Prior Art Structures A, B and C, tubes were filled with mineral spirits and stored flat. Duplicate sets of each variable were stored in two trials at 120°F. and 140°F. (49 and 60°C). Within one week stress cracks appeared in variables A and C. There were none in variable B or Example 3. The remaining samples were squeeze tested. Example 3 and variable C were judged equal. Variable B was better; variable A was the worst.

In a processing test, variable B and Example 3 were subjected to higher than normal down pressure on commercial side seaming equipment to demonstrate susceptibility to generation of polydust. Polymer dust did accumulate during running of variable B, indicating a polydust problem. No polydust was observed during the similar comparative running of Example 3 tubes.

From the above testing of Example 3 tubes against prior art variables it was concluded that the use of LLDPE as the sealant layer provides improved stress crack resistance over LDPE (variable A); its stress crack resistance is equal to EAA (variables B and C); and it is not susceptible to generation of polydust by processing equipment as is EAA (variable B trial).

In tube structures according to this invention, which benefit from the improved shock resistance imparted by the incorporation of OPP, the sealant layer may be chosen from a selection of heat sealable materials, so long as stress crack resistance is not a critical factor, considering the product to be contained. Thus Example 1 shows LDPE. Illustrative of other acceptable materials useful for that layer are MDPE, HDPE, EVA, Surlyn (Registered Trade Mark), and ethylene methacrylic acid. These materials would, of course have to be compatible for heat sealing to the other surface layer to form the tube lap seal.

Thus it is seen that the invention provides multiple layer sheet structures, and tubes made therefrom, having improved shock abuse resistance. Where structures according to this invention incorporate LLDPE, they possess improved stress crack resistance over some prior art structures, and equivalent stress crack resistance and better resistance to generation of polydust than others.

## Claims

1. A sheet structure including a multiplicity of layers firmly adhered to each other, these layers in order comprising an exterior heat-sealable layer, a first adhesive layer, a barrier layer, a second adhesive layer and a polyethylene layer, characterised in that, in order to provide the structure with enhanced shock resistance, a layer of oriented polypropylene (OPP) is interposed between the second adhesive and polyethylene layers, the latter two layers serving in an effective adhesive capacity to join the OPP layer into the structure with good adhesion.

2. A structure according to claim 1, characterized in that the heat sealable layer and the barrier layer, respectively, comprise linear low density polyethylene (LLDPE) and a metal foil.

3. A structure according to claim 1, characterised by the OPP layer being at least 0.65 mil (0.016 mm) thick, and by the adhesion between the OPP layer and said second adhesive layer being at least 54 grams per inch (21.3 g/cm).

4. A structure according to claim 3, characterised in that the OPP layer is 0.65 to 2.0 mils (0.016 to 0.051 mm) thick, and the polyethylene layer is 0.7 to 3.0 mils (0.018 to 0.076 mm) thick.

5. A structure according to claim 3 or claim 4, characterised in that a major component of said heat sealable layer comprises linear low density polyethylene (LLDPE).

6. A structure according to claim 3, 4 or 5, further characterised by additional layers bonded on the polyethylene layer with good adhesion, the additional layers in order comprising a paper layer; a second polyethylene layer; and a second exterior layer.

7. A structure according to claim 6, characterised by a heat sealable layer of LLDPE 0.7 to 3.0 mils (0.018 to 0.076 mm), e.g. 1.2 mils (0.030 mm) thick, a barrier layer of metal foil 0.35 to 0.7 mil (0.009 to 0.018 mm) thick, the OPP layer being 0.75 to 2.0 mils (0.019 to 0.051 mm) thick, the first polyethylene layer being 0.7 to 3.0 mils (0.018 to 0.076 mm) thick, and the sum of the thicknesses of the second polyethylene layer and the second exterior layer being 2.0 to 5.0 mils (0.051 to 0.013 mm).

8. A structure according to claim 7, characterised in that the sum of the thicknesses of the LLDPE layer and the first adhesive layer is 2.0 to 5.0 mils (0.051 to 0.013 mm).

9. A structure according to any preceding claim, characterised by the OPP layer being 1 mil thick (0.025 mm).

10. A structure according to any preceding claim, characterised in that the second adhesive layer and the polyethylene layer each contain EMA (ethylene methyl acrylate) copolymer as a blend component up to 100%.

11. A structure according to any of claims 1 to 9, characterised in that the second adhesive layer and the polyethylene layer each have a polyethylene imine primer coating on their surfaces which confront the OPP layer.

12. A structure according to any preceding claim, characterised in that the adhesion between the OPP layer and the second adhesive layer is at least 167 grams per inch (65.7 g/cm).

13. A flexible dispensing tube made from the multiple layer sheet structure according to any of the preceding claims.

14. A tube according to claim 13, characterised in that the sheet material comprises consecutive layers which, taken in order, include
   (a) a first heat sealable polymer layer;
   (b) a first adhesive layer;
   (c) a metal foil layer;
   (d) a second adhesive layer;
   (e) an OPP (oriented polypropylene) layer;
   (f) a polyethylene adhesive layer;
   (g) a paper layer; and
   (h) a second heat sealable polymer layer.

15. A tube according to claim 13 or claim 14, characterised in that the first heat sealable polymer layer comprises LLDPE (linear low density polyethylene) or EAA (ethylene acrylic acid).

16. A tube according to claim 14, characterised in that the second heat sealable layer is polyethylene, and there is an additional polymeric layer between the paper layer and the second heat sealable layer, the combined thicknesses of the second heat sealable layer and the additional layer for example being 2.0 to 5.0 mils (0.051 to 0.013 mm).

17. A tube according to claim 14, characterised in that the said second and third adhesive layers contain ethylene methyl acrylate copolymer as a blend component, up to 100%.

**Patentansprüche**

1. Bahnstruktur mit einer Mehrzahl fest aneinanderhaftender Schichten, die der Reihe nach eine heißsiegelfähige Außenschicht, eine erste Klebstoffschicht, eine Sperrschicht, eine zweite Klebstoffschicht und eine Polyäthylenschicht umfassen, dadurch gekennzeichnet, daß, um der Struktur eine erhöhte Stoßfestigkeit zu vermitteln, eine Schicht aus orientiertem Polypropylen (OPP) zwischen der ersten Klebstoff- und der Polyäthylenschicht angeordnet ist, wobei die letzteren beiden Schichten in effektivem Haftvermögen dazu dienen, die OPP-Schicht in die Struktur mit guter Haftung einzubinden.

2. Struktur nach Anspruch 1, dadurch gekennzeichnet, daß die heißsiegelfähige Schicht bzw. die Sperrschicht lineares Polyäthylen niedriger Dichte (LLDPE) und eine Metallfolie umfaßt.

3. Struktur nach Anspruch 1, dadurch gekennzeichnet, daß die OPP-Schicht zumindest 0,65 Mil (0,016 mm) dick ist und durch die Haftung zwischen der OPP-Schicht und der zweiten Klebstoffschicht zumindest 54 Gramm pro Zoll (21.3 g/cm) beträgt.

4. Struktur nach Anspruch 3, dadurch gekennzeichnet, daß die OPP-Schicht 0,65 bis 2,0 Mil (0,016 bis 0,051 mm) dick und die Polyäthylenschicht 0,7 bis 3,0 Mil (0,018 bis 0,076 mm) dick ist.

5. Struktur nach Anspruch 3 oder 4, dadurch gekennzeichnet, daß eine Hauptkomponente der heißsiegelfähigen Schicht aus linearem Polyäthylen niedriger Dichte (LLDPE) besteht.

6. Struktur nach Anspruch 3, 4 oder 5, gekennzeichnet durch zusätzliche Schichten, die mit der Polyäthylenschicht mit guter Haftung verbunden sind, wobei die zusätzlichen Schichten der Reihe nach eine Papierschicht, eine zweite Polyäthylenschicht und eine zweite Außenschicht umfassen.

7. Struktur nach Anspruch 6, gekennzeichnet durch eine hießsiegelfähige Schicht aus LLDPE von 0,7 bis 3,0 Mil (0,018 bis 0,076 mm), z.B. 1,2 Mil (0,030 mm) Dicke, eine Sperrschicht aus Metallfolie von 0,35 bis 0,7 Mil (0,009 bis 0,018 mm) Dicke, eine Dicke der OPP-Schicht von 0,75 bis 2,0 Mil (0,019 bis 0,051 mm), eine Dicke der ersten Polyäthylenschicht von 0,7 bis 3,0 Mil (0,018 bis 0,076 mm) und eine Summendicke der zweiten Polyäthylenschicht und der zweiten Außenschicht von 2,0 bis 5,0 Mil (0,051 bis 0,013 mm).

8. Struktur nach Anspruch 7, dadurch gekennzeichnet, daß die Summendicke der LLDPE-Schicht und der ersten Klebstoffschicht 2,0 bis 5,0 Mil (0,051 bis 0,013 mm) beträgt.

9. Struktur nach einem vorhergehenden Anspruch, dadurch gekennzeichnet, daß die OPP-Schicht 1 Mil (0,025 mm) dick ist.

10. Struktur nach einem vorhergehenden Anspruch, dadurch gekennzeichnet, daß die zweite Klebstoffschicht und die Polyäthylenschicht jeweils ein EMA-(Äthylenmethylakrylat)-Copolymer als eine Mischungskomponente bis zu 100% enthält.

11. Struktur nach einem der Ansprüche 1 bis 9, dadurch gekennzeichnet, daß die zweite Klebstoffschicht und die Polyäthylenschicht jeweils eine Polyäthyleniminprimerbeschichtung auf ihren Oberflächen aufweisen, die der OPP-Schicht zugewandt sind.

12. Struktur nach einem vorhergehenden Anspruch, dadurch gekennzeichnet, daß der Klebstoff zwischen der OPP-Schicht und der zweiten Klebstoffschicht zumindest 167 Gramm pro Zoll (65,7 g/cm) beträgt.

13. Flexible Spendertube, hergestellt aus der mehrschichtigen Bahnstruktur nach einem der vorhergehenden Ansprüche.

14. Tube nach Anspruch 13, dadurch gekennzeichnet, daß das Bahnmaterial aufeinanderfolgende Schichten umfaßt, die, der Reihe nach,
   a) eine erste heißsiegelfähige Polymerschicht,
   b) eine erste Klebstoffschicht,
   c) eine Metallfolienschicht,
   d) eine zweite Klebstoffschicht,
   e) eine OPP-(orientiertes Polypropylen)-Schicht,
   f) eine Polyäthylenklebstoffschicht,
   g) eine Papierschicht und
   h) eine zweite heißsiegelfähige Polymerschicht umfassen.

15. Tube nach Anspruch 13 oder 14, dadurch gekennzeichnet, daß die erste heißsiegelfähige Polymerschicht LLDPE (lineares Polyäthylen niedriger Dichte) oder EAA (Äthylenakrylsäure) umfaßt.

16. Tube nach Anspruch 14, dadurch gekennzeichnet, daß die zweite heißsiegelfähige Schicht aus Polyäthylen besteht und eine zusätzliche Polymerschicht zwischen der Papierschicht und der zweiten heißsiegelfähigen Schicht vorhanden ist, wobei die zusammengenommene Dicke der zweiten heißsiegelfähigen Schicht und der zusätzlichen Schicht zum Beispiel 2,0 bis 5,0 Mil (0,051 bis 0,013 mm) beträgt.

17. Tube nach Anspruch 14, dadurch gekennzeichnet, daß die zweite und die dritte Klebstoffschicht ein Äthylenmethylakrylatcopolymer als Mischungskomponente bis zu 100% enthält.

## Revendications

1. Structure lamellée comprenant une pluralité de couches adhérées solidement l'une à l'autre, ces couches étant dans l'ordre une couche extérieure thermosoudable, une première couche adhésive, une couche formant barrière, une seconde couche adhésive et une couche de polyéthylène, caractérisée en ce qu'en vue de fournir une structure ayant une résistance améliorée au choc, une couche de polypropylène orienté (PPO) est interposée entre la seconde couche adhésive et la couche de polyéthylène, ces deux dernières couches servant dans une fonction adhésive efficace pour réunir la couche PPO dans la structure avec une bonne adhésion.

2. Structure selon la revendication 1, caractérisée en ce que la couche thermosoudable et la couche formant barrière sont formées respectivement de polyéthylène linéaire à faible densité (LLDPE) et une feuille de métal.

3. Structure selon la revendication 1, caractérisé en ce que la couche PPO a une épaisseur d'au moins 0,65 mil (0,016 mm) et que l'adhésion entre la couche PPO et la seconde couche adhésive est au moins égale à 54 g par pouce (21,3 g/cm).

4. Structure selon la revendication 3, caractérisée en ce que la couche PPO a une épaisseur de 0,65 à 2,0 mils (0,016 à 0,051 mm) et que la couche de polyéthylène a une épaisseur de 0,7 à 3,0 mils (0,018 à 0,076 mm).

5. Structure selon la revendication 3 ou 4, caractérisée en ce qu'une composante majeure de la couche thermosoudable est constituée par le polyéthylène linéaire à faible densité (LLDPE).

6. Structure selon la revendication 3, 4 ou 5, caractérisée en outre par des couches supplémentaires fixées à la couche de polyéthylène avec une bonne adhésion, les couches supplémentaires étant dans l'ordre une couche de papier, une seconde de polyéthylène et une seconde couche extérieure.

7. Structure selon la revendication 6, caractérisée en ce qu'une couche thermosoudable de polyéthylène linéaire à faible densité (LLDPE) d'une épaisseur de 0,7 à 3,0 mils (0,018 à 0,076 mm), par exemple 1,2 mils (0,030 mm), une couche formant barrière d'une feuille métallique d'une épaisseur de 0,35 à 0,7 mil (0,009 à 0,018 mm), la couche PPO ayant une épaisseur de 0,75 à 2,0 mils (0,019 à 0,051 mm), la première couche de polyéthylène ayant une épaisseur de 0,7 à 3,0 mils (0,018 à 0,076 mm) et la somme des épaisseurs de la seconde couche de polyéthylène et de la seconde couche extérieure étant de 2,0 à 5,0 mils (0,051 à 0,013 mm).

8. Structure selon la revendication 7, caractérisée en ce que la somme des épaisseurs de la couche de polyéthylène linéaire à faible densité (LLDPE) et la première couche adhésive est 2,0 à 5,0 mils (0,051 à 0,013 mm).

9. Structure selon l'une quelconque des revendications précédentes, caractérisée en ce que la couche PPO a une épaisseur de 1 mil (0,025 mm).

10. Structure selon l'une quelconque des revendications précédentes, caractérisée en ce que la seconde couche adhésive et la couche de polyéthylène contiennent chacune du copolymère (éthylène-acrylate de méthyl) EMA comme élément de mélange jusqu'à 100%.

11. Structure selon l'une quelconque des revendications 1 à 9, caractérisée en ce que la seconde couche adhésive est la couche de polyéthylène ont chacune un revêtement de fond d'imine de polyéthylène sur leurs surfaces qui font face à la couche PPO.

12. Structure selon l'une quelconque des revendications précédentes, caractérisée en ce que l'adhésion entre la couche PPO et la seconde couche adhésive est au moins égale à 167 g par pouce (65,7 g/cm).

13. Tube de distribution flexible fait à partir d'une structure lamellée multicouche selon l'une quelconque des revendications précédentes.

14. Tube selon la revendication 13, caractérisé en ce que la matière feuilletée comprend des couches consécutives qui, prises dans l'ordre, sont:
    (a) une première couche de polymère thermosoudable;
    (b) une première couche adhésive;
    (c) une couche de feuille métallique;
    (d) une seconde couche adhésive;
    (e) une couche PPO (polypropylène orienté);
    (f) une couche adhésive de polyéthylène;
    (g) une couche de papier; et
    (h) une seconde couche de polymère thermosoudable.

15. Tube selon la revendication 13 ou 14, caractérisé en ce que la première couche de polymère thermosoudable est composée de polyéthylène linéaire à faible densité (LLDPE) ou d'éthylène-acide acrylique (EAA).

16. Tube selon la revendication 14, caractérisé en ce que la seconde couche thermosoudable est du polyéthylène et qu'il y a une couche polymérique supplémentaire entre la couche de papier et la seconde couche thermosoudable, l'épaisseur combinée de la seconde couche thermosoudable et la couche supplémentaire étant par exemple 2,0 à 5,0 mils (0,051 à 0,013 mm).

17. Tube selon la revendication 14, caractérisé en ce que les seconde et troisième couches adhésives contiennent du copolymère éthylène-acrylate de méthyl comme élément du mélange jusqu'à 100%.

FIG.1

FIG.2

FIG.3

FIG.4

PRIOR ART

FIG.5